# EUROPEAN PATENT SPECIFICATION

(11) **EP 3 515 743 B1**
(45) Date of publication and mention of the grant of the patent: **04.11.2020**
(21) Application number: 17771841.8
(22) Date of filing: 13.09.2017
(51) Int. Cl.: B60K 25/00, B62D 5/00, B62D 21/09

(54) **VEHICLE ANCILLARY SYSTEM**
FAHRZEUGHILFSSYSTEM
SYSTÈME AUXILIAIRE DE VÉHICULE

(30) Priority: 26.09.2016 GB 201616281
(43) Date of publication of application: 31.07.2019
(73) Proprietor: Arrival Limited, Banbury, Oxfordshire OX16 2SN (GB)
(72) Inventor: SIMONAVICIUS, Matas, Banbury Oxfordshire OX16 2SN (GB); JARDINE, Ben, Banbury Oxfordshire OX16 2SN (GB)
(74) Representative: Korenberg, Alexander Tal
(86) International application number: PCT/GB2017/052693
(87) International publication number: WO 2018/055336

(56) References cited:
- GB-A- 2 443 272
- JP-A- S6 325 178
- US-A1- 2006 091 730
- US-A1- 2008 093 154
- US-A1- 2015 151 863

## Description

### Field

This specification relates to a modular ancillary system for a vehicle. Specifically, this specification relates to a modular ancillary system comprising an air compressing apparatus and/or a power steering apparatus for simple installation in a vehicle.

### Background

Automotive vehicles, such as trucks and buses, generally include an air compression apparatus and a power steering apparatus. The air compression apparatus generates compressed air for the operation of several components of the vehicle, including service brakes, parking brakes, height adjustable suspensions, air bags, and other additional equipment which can be provided in the vehicle. In some vehicles, an electricity generator can be provided which is operated by compressed air to generate electricity.

It is known electric pump to provide fluid pressure to a hydraulic power steering system. Such a system is termed an electro-hydraulic power steering apparatus. The electric pump generates fluid pressure which is provided to a hydraulic cylinder that acts on the steering rack (and wheels) in response to movement of the steering wheel.

Typically, air compression apparatus and power steering apparatus are fixedly provided at the vehicle during the vehicle manufacturing process.

US 2006/091730 describes a heavy-duty vehicle accessory assembly including a vehicle accessory having an input shaft; an electric accessory motor having an output shaft, the electric accessory motor configured to supply power to the vehicle accessory; and a mechanical coupling configured to couple the electric accessory motor with the vehicle accessory, the mechanical coupling including a first pulley affixed to the output shaft of the electric accessory motor, a second pulley affixed to the input shaft of the vehicle accessory, and one or more belts that mechanically couple the first pulley with the second pulley.

GB 2443272 describes a hybrid electric vehicle such as a bus comprising at least one electric motor arranged to drive the vehicle, and at least two demountable modules. A first removable module comprises one or more batteries for storing and providing electrical energy for powering the electric motors and a second removable module comprises a charging unit which may include a diesel engine and an electrical generator for charging the batteries. A cooling module and an ancillary drive module including compressors may be provided. Modules may be provided in a sub-frame, which includes docking openings and which may be received by a modified rear chassis portion 10 of the vehicle. Independently demountable modules facilitate servicing and replacement.

### Summary

In a first embodiment of the invention, this specification describes an ancillary system, according to claim 1, for use with a vehicle.

In a second embodiment of the invention, this specification describes an ancillary system, according to claim 4, for use with a vehicle.

In a third embodiment of the invention, this specification describes an ancillary system, according to claim 8, for use with a vehicle.

### Brief Description of the Drawings

For a more complete understanding of the methods, apparatuses, and systems described herein, reference is now made to the following descriptions taken in connection with the accompanying drawings in which:
Figure 1 is a block diagram illustrating an ancillary system for a vehicle, according to an exemplary embodiment;
Figure 2 is a top view of an ancillary system, according to another exemplary embodiment;
Figure 3 is a top view of an ancillary system, according to another exemplary embodiment;
Figure 4 is a perspective side view of the ancillary system of Figure 3; and
Figure 5 is another perspective view of the ancillary system of Figure 3.

### Detailed Description

A limitation of the currently known arrangements of air compression apparatus and power steering apparatus is the lack of flexibility to customise a vehicle according to the needs and desires of individual users, as well as the difficulty to service these internal components separately when they are faulty. Embodiments of the invention provide for an ancillary system which is detachably connected to a chassis of a vehicle so as to address this particular limitation.

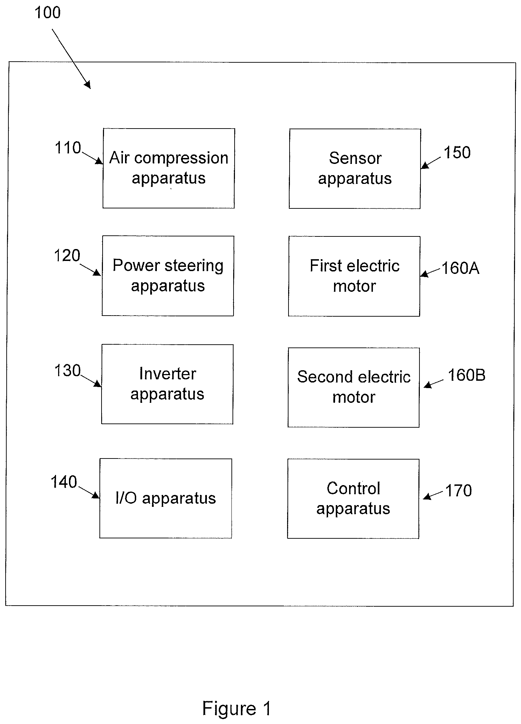

Figure 1 is a block diagram illustrating an ancillary system for a vehicle, according to an exemplary embodiment.

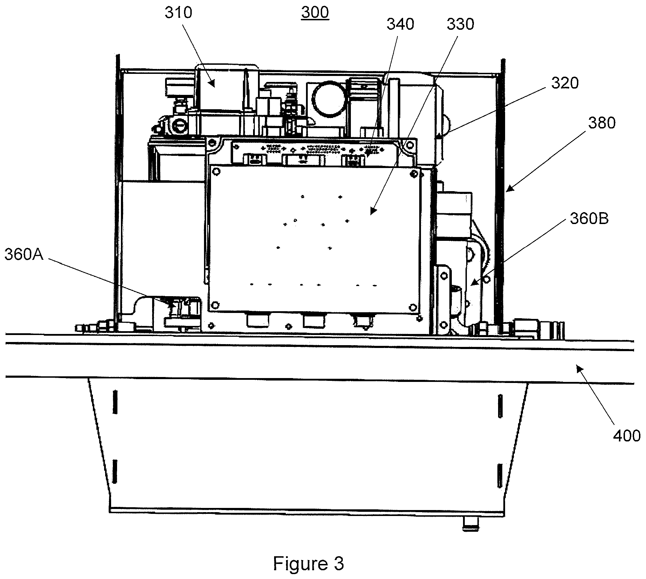

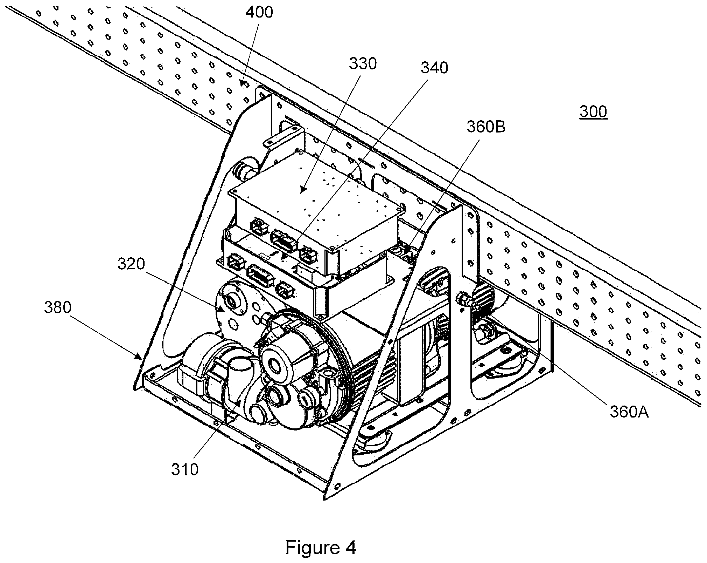

As shown in Figure 1, the ancillary system 100 comprises an air compression apparatus 110, a power steering apparatus 120, an inverter apparatus 130, an input/output (I/O) apparatus 140, and a sensor apparatus 150, a first electric motor 160A, a second electric motor 160B, and a control apparatus 170. All the components comprised in the ancillary system 100 are packaged together and the ancillary system 100 as a whole is arranged to be detachably connected to a vehicle, e.g. an electric vehicle comprising a power storage apparatus, in a manner similar to that shown in Figures 3 and 4.

The air compression apparatus 110 is arranged to generate compressed air for use by the vehicle. Specifically, the air compression apparatus 110 is driven by the torque transmitted from the first electric motor 160A. The air compression apparatus 110 comprises a valve which is arranged to distribute the generated compressed air between a plurality of air consuming circuits in the vehicle.

The power steering apparatus 120 is arranged to provide hydraulic pressure for power steering. The power steering apparatus 120 comprises a hydraulic pump which is driven by torque transmitted from the second electric motor 160B. The pump, when driven by the second electric motor 160B, generates a flow of hydraulic fluid to a power steering box which is contained in the power steering apparatus.

The inverter apparatus 130 comprises a first inverter and a second inverter. The first inverter and the second inverter are arranged to receive power from a power storage apparatus (not shown in the drawing) of the vehicle, and power the first electric motor 160A and the second electric motor 160B respectively to generate rotary driving force which in turn generates torque for the operation of the air compression apparatus 110 and the power steering apparatus 120.

In the present embodiment, each of the first inverter and the second inverter includes an inverter circuit that converts direct-current (DC) power to alternating-current (AC) power for driving the first electric motor 160A and the second electric motor 160B respectively. The inverter apparatus 130 is controlled by the control apparatus 170. In particular, the inverter circuit of each of the first inverter and the second inverter is controlled by the control apparatus 170 so that the operation of the air compression apparatus 110 and the power steering apparatus 120 is managed.

The I/O apparatus 140 comprises a plurality of inputs and outputs for allowing communication of the air compression apparatus 110 and the power steering apparatus 120 with the control apparatus 170. In the present embodiment, the I/O apparatus 140 is part of a Controller Area Network (CAN) in which apparatuses within the vehicle can communication with each other in applications. Specifically, the I/O apparatus 140 is a slave module in the Controller Area Network (CAN) whereas the control apparatus 170 is a master module, and the I/O apparatus 140 communicates with the control apparatus 170 via a standardised CAN protocol.

The sensor apparatus 150 is arranged to detect at least one of: motor oil temperature, compressor oil temperature, hydraulic fluid temperature, and hydraulic fluid level.

The detected data is transmitted to the control apparatus 170 which in turn controls the operation of the air compression apparatus 100 and power steering apparatus 120 as described above on the basis of the detected data. For example, the sensor apparatus 150 may control how the hydraulic fluid is directed in the power steering apparatus 120 on the basis of the detected hydraulic fluid level.

As the ancillary system 100 is provided with its own inverter apparatus 130 and I/o apparatus 140, the ancillary system 100 only requires power supply and communication connection in order to become fully operational. The ancillary system 100 is further provided with a quick-release connection mechanism for connecting to chassis of the vehicle so as to allow easy plug-and-play. The quick-release connection mechanism is similar to that shown in Figures 3 and 4 and will be described in more detail in relation to Figures 3 and 4. When the vehicle is being serviced, the ancillary system 100 can be detached from the rest of the components and be substituted by a replacement ancillary system 100. The detached original ancillary system 100 can therefore be serviced separately from the rest of the vehicle which means there is a reduction in vehicle downtime.

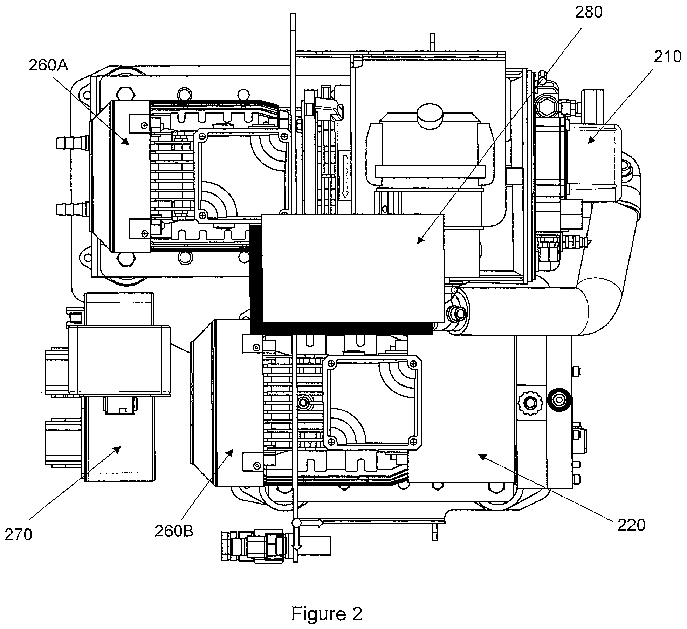

Figure 2 is a top view of an ancillary system, according to another exemplary embodiment. In particular, Figures 2 illustrates an ancillary system as a top plan view.

As shown in Figure 2, there is provided an ancillary system 200, comprising an air compression apparatus 210, a power steering apparatus 220, a first electric motor 260A, a second electric motor 260B, an electrical connection apparatus 270, and an inverter and I/O system 280. Also as shown in Figure 2, the components of the ancillary system 200 are arranged in a compact configuration so as to reduce the amount of space occupied during storage and when the ancillary system 200 is mounted onto a vehicle.

A difference between the embodiments shown in Figures 1 and 2 is that the ancillary system 200 of Figure 2 does not comprise a control apparatus or a sensor apparatus. These may be provided at the vehicle and connected to the components of the ancillary system 200 after the ancillary system 200 is installed at the vehicle. In some cases, the sensor apparatus maybe completely omitted.

The air compression apparatus 110 is arranged to generate compressed air for use by the vehicle. Specifically, the air compression apparatus 110 is driven by the torque transmitted from the first electric motor 160A. The air compression apparatus 110 comprises a valve which is arranged to distribute the generated compressed air between a plurality of air consuming circuits in the vehicle. A cooling apparatus (not labelled in Figure 2) is provided adjacent to the air compression apparatus 210 so as to circulate water in fluid communication with the air compression apparatus to cool the air compression apparatus.

The power steering apparatus 220 is arranged to provide hydraulic pressure for power steering. The power steering apparatus 220 comprises a hydraulic pump which is driven by torque transmitted from the second electric motor 260B when the ancillary system 200 is mounted onto the vehicle. The pump, when driven by the second electric motor 260B, generates a flow of hydraulic fluid to a power steering box which is contained in the power steering apparatus 220.

The electrical connection apparatus 270 is arranged to electrically connect the air compression apparatus 210 and the power steering apparatus 210 to a power storage apparatus (not shown in the drawing) via the inverter and I/O system 280.

The inverter and I/O system 280 in the present embodiment comprises an inverter apparatus and an I/O apparatus both integrated in a single system to be mounted above the air compression apparatus 210 and the power steering apparatus 220, as shown in Figure 2.

The inverter apparatus is arranged to receive power from a power storage apparatus (not shown in the drawing) of the vehicle and power the first electric motor 260A and the second electric motor 260B to generate rotary driving force which in turn generates torque for the operation of the air compression apparatus 110 and the power steering apparatus 120. In the present embodiment, the inverter apparatus 130 includes an inverter circuit that converts direct-current (DC) power to alternating-current (AC) power for driving the first electric motor 260A and the second electric motor 260B. The inverter apparatus is controlled by a control apparatus (not shown in the drawing) when the ancillary system 200 is mounted onto the vehicle. In particular, the control apparatus controls the inverter circuit of the inverter apparatus so as to control the operation of the air compression apparatus 210 and the power steering apparatus 220.

The I/O apparatus comprises a plurality of inputs and outputs for allowing communication of the air compression apparatus 110 and the power steering apparatus 220 with the control apparatus. In the present embodiment, the I/O apparatus is part of a Controller Area Network (CAN) in which apparatuses within the vehicle can communication with each other in applications. Specifically, the I/O apparatus is a slave module in the Controller Area Network (CAN) whereas the control apparatus (not shown in the drawing) is a master module, and the I/O apparatus communicates with the control apparatus via a standardised CAN protocol.

In the present embodiment, since the I/O apparatus is part of the ancillary system 100 and physically separate from the control apparatus of the vehicle, the Controller Area Network (CAN) of the present embodiment has a distributed architecture which makes the assembly of different vehicle variants possible, in addition to being more efficient and cost-effective.

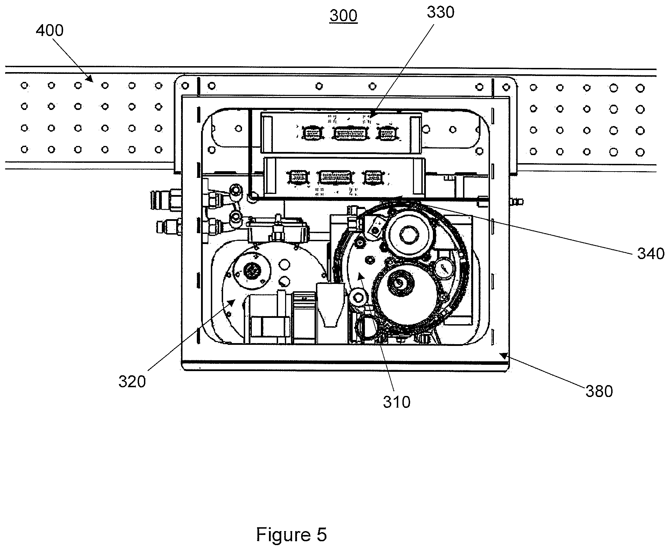

Figure 3, Figure 4, and Figure 5 are respectively a top view and two perspective views of an ancillary system, according to another exemplary embodiment. Figure 3 illustrates the ancillary system as viewed from the top; Figure 4 illustrates the ancillary system as viewed from a side; while Figure 5 illustrates the ancillary system as viewed from the front.

In the ancillary system 300 as illustrated in Figures 3, 4, and 5, there is provided an outer frame 380 which houses the components of the ancillary system 300 so that they are packaged together in a modular manner and can be detachably connected to the chassis 400 of the vehicle as a whole. The outer frame 380 of the ancillary system is configured so as to allow mounting on the ancillary system 300 onto a part of the chassis 400 of the vehicle. Specifically, the outer frame 380 in this embodiment is provided with a quick-release connection mechanism which comprises a plurality of bolt holes for use with a nut and bolt assembly so as to secure the ancillary system 300 to chassis 400 through holes that are provided on the chassis 400.

An air compression apparatus 310, a power steering apparatus 320, an inverter apparatus 330, an I/O apparatus 340, a first electric motor 360A, and a second electric motor 360B are contained within the outer frame 380. As shown in Figures 3 and 4, the inverter apparatus 330 and the I/O apparatus are mounted on top of the rest of the components of the ancillary system 300, and the inverter apparatus 330 is mounted on top of the I/O apparatus 340. For the sake of brevity, the functionalities of the components of the ancillary system 300 will not be described in detail as they are similar to those described with respect to Figures 1 and 2.

As the ancillary system 300 is provided with its own inverter apparatus 330 and I/O apparatus 340, the ancillary system 300 can be easily mounted onto the chassis 400 of the vehicle. As described above, the ancillary system 300 is further provided with a quick-release connection mechanism with the chassis of the vehicle so as to allow easy plug-and-play. When the vehicle is being serviced, the ancillary system 300 can be detached from the rest of the components and be substituted by a replacement ancillary system 100. The detached original ancillary system 300 can therefore be serviced separately from the rest of the vehicle which means there is a reduction in vehicle downtime.

When the ancillary system 300 is attached to the chassis 400, wiring of the connection between the components in the ancillary system 300 with other components in the vehicle can be carried out, e.g. by a user, to as to allow the components of the ancillary system 300 to become fully functional. For example, the inverter apparatus 330 will be electrically connected to a power storage apparatus at the vehicle.

Although it is described in an above embodiment that the ancillary system comprises a first electric motor and a second electric motor, in alternative embodiments the ancillary system may not comprise the first and/or second electric motor. In these alternative embodiments, the first and/or second electric motor maybe provided at the vehicle outside of the ancillary system and be connected to components of the ancillary system when the ancillary system is connected to a chassis of the vehicle.

Although it is described in an above embodiment that the inverter apparatus comprises a first inverter and a second inverter, in alternative embodiments the inverter apparatus may only comprise a single inverter arranged to receive power from a power storage apparatus and power both the first electric motor and the second electric motor to generate rotary driving force which in turn generates torque for the operation of the air compression apparatus 110 and the power steering apparatus.

Although it is described in an above embodiment that the ancillary system comprises the air compression apparatus and the power steering apparatus, in alternative embodiments the ancillary system may only comprise one of the air compression apparatus and the power steering apparatus. In these alternative embodiments, the ancillary system may comprise a single motor arranged to provide torque for driving the air compression apparatus or the power steering apparatus. In these alternative embodiments, the single motor may be provided with clutch arrangement and belt drive. In other alternative embodiments, an electric motor may not be implemented in the ancillary system at all, and an electric motor may instead be provided at the vehicle which is to be connected to the air compression apparatus or the power steering apparatus when the ancillary system is mounted onto the vehicle.

Although it is described in an above embodiments that the ancillary system comprises a control apparatus, in alternative embodiments, the control apparatus may be provided at the vehicle outside of the ancillary system and be connected to components of the ancillary system when the ancillary system is connected to a chassis of the vehicle.

In alternative embodiments, the electrical connection apparatus may not be provided in the ancillary system. In these alternative embodiments, electrical connection between components of the ancillary system and other components of the vehicle may be established using other means.

Although it is described in an above embodiment that the ancillary system comprises the inverter apparatus and the I/O apparatus, in alternative embodiment the inverter apparatus and/or the I/O apparatus may be implemented external to the ancillary system and arranged to be connected to the air compression apparatus and/or the power steering apparatus when the ancillary system is mounted onto the vehicle.

Although it is described in an above embodiment that a first electric motor is arranged to provide torque for driving the air compression apparatus and the second electric motor is arranged to provide torque for driving the power steering apparatus, in alternative embodiments a single electric motor maybe provided for providing torque for both the air compression apparatus and the power steering apparatus.

Although it is described in an above embodiment that a cooling apparatus is provided in the ancillary system so as to cool the air compression apparatus, in alternative embodiments the cooling apparatus may not be provided. In these alternative embodiments, the air compression apparatus maybe air-cooled.

In alternative embodiments, the ancillary system may not be provided with a sensor apparatus, for example in order to save space.

Although it is described in an above embodiment that the inverter apparatus and the I/O apparatus are mounted on top of the rest of the components of the ancillary system, in alternative embodiments the inverter apparatus and/or the I/O apparatus may be arranged in a different manner according to factors such as space compatibility with a vehicle, sizes of the components, electrical/communicational connection between the components in the ancillary system and the components in the vehicle, etc.

Although it is described in an above embodiment that the inverter apparatus and the I/O apparatus re integrated in a single system, in alternative embodiments the inverter apparatus and the I/O apparatus maybe provided separately within the ancillary system.

Although it is described in an above embodiment that the ancillary system can be secured to the chassis of the vehicle by use of a nut and bolt assembly, in alternative embodiments other quick-release connection mechanisms may be provided at the ancillary system for detachable connection with a vehicle. For example, in an alternative embodiment the ancillary system may comprise a hook member for hanging the ancillary system on a chassis of a vehicle.

Although various aspects of the present disclosure are set out in the independent claims, other aspects of the present disclosure comprise other combinations of features from the described embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An ancillary system (100) for use with a vehicle comprising:
an air compression apparatus (110) arranged to generate compressed air for use by the vehicle;
a first electric motor (160A) arranged to drive the air compression apparatus;
a power steering apparatus (120) arranged to provide hydraulic pressure for power steering; and
an input/output apparatus (140) arranged to allow communication of at least one of the air compression apparatus and the power steering apparatus with a control apparatus (170) of the vehicle, the input/output apparatus and the control apparatus being arranged to communicate via a standardised controller area network, CAN, protocol,
wherein all components of the ancillary system are packaged together and the ancillary system as a whole is arranged to be detachably connected to the vehicle.

2. The ancillary system according to claim 1, further comprising a first inverter arranged to power the first electric motor to generate rotary driving force which in turn generates torque for the operation of the air compression apparatus.

3. The ancillary system according to claim 1 or claim 2, further comprising a second electric motor (160B) arranged to drive the power steering apparatus, optionally further comprising a second inverter arranged to power the second electric motor to generate rotary driving force which in turn generates torque for the operation of the power steering apparatus.

4. An ancillary system (100) for use with a vehicle comprising:
an air compression apparatus (110) arranged to generate compressed air for use by the vehicle;
a first electric motor (160A) arranged to drive the air compression apparatus;
an inverter apparatus (130) arranged to power the first electric motor to generate rotary driving force which in turn generates torque for the operation of the air compression apparatus; and
an input/output apparatus (140) arranged to allow communication of the air compression apparatus with a control apparatus (170) of the vehicle, the input/output apparatus and the control apparatus being arranged to communicate via a standardised controller area network, CAN, protocol,
wherein all components of the ancillary system are packaged together and the ancillary system as a whole is arranged to be detachably connected to the vehicle.

5. The ancillary system according to claim 4, further comprising a power steering apparatus (120) arranged to provide hydraulic pressure for power steering.

6. The ancillary system according to claim 5, further comprising a second electric motor (160B) arranged to drive the power steering apparatus, optionally wherein the inverter apparatus is arranged to power the second electric motor to generate rotary driving force which in turn generates torque for the operation of the power steering apparatus.

7. The ancillary system according to claim 5, wherein the input/output apparatus is arranged to allow communication of the power steering apparatus with the control apparatus.

8. An ancillary system (100) for use with a vehicle comprising:
a power steering apparatus (120) arranged to provide hydraulic pressure for power steering;
a first electric motor (160A) arranged to drive the power steering apparatus;
an inverter apparatus (130) arranged to power the first electric motor to generate rotary driving force which in turn generates torque for the operation of the power steering apparatus; and
an input/output apparatus (140) arranged to allow communication of the power steering apparatus with a control apparatus (170) of the vehicle, the input/output apparatus and the control apparatus being arranged to communicate via a standardised controller area network, CAN, protocol,
wherein all components of the ancillary system are packaged together and the ancillary system as a whole is arranged to be detachably connected to the vehicle.

9. The ancillary system according to claim 8, further comprising an air compression apparatus (110) arranged to generate compressed air for use by the vehicle.

10. The ancillary system according to claim 9, further comprising a second electric motor (160B) arranged to drive the air compression apparatus, optionally wherein the inverter apparatus is arranged to power the second electric motor to generate rotary driving force which in turn generates torque for the operation of the air compression apparatus.

11. The ancillary system according to any of claims 9 to 10, wherein the input/output apparatus is arranged to allow communication of the air compression apparatus with the control apparatus.

12. The ancillary system according to any preceding claim, further comprising a sensor apparatus (150) for detecting at least one of: motor oil temperature, compressor oil temperature, hydraulic fluid temperature, and hydraulic fluid level, wherein the detected data is transmitted to a control apparatus of the vehicle.

13. The ancillary system according to any preceding claim, further comprising a quick-release connection mechanism for connecting to a chassis (400) of the vehicle.

14. The ancillary system according to claim 13, wherein the connection mechanism comprises an outer frame (380) arranged to contain all components of the ancillary system, the outer frame being detachably connectable to a chassis (400) of the vehicle.

15. The ancillary system according to claim 14, wherein the outer frame comprises at least one bolt hole for use with a nut and bolt assembly so as to secure the ancillary system to the chassis of the vehicle.

## Patentansprüche

1. Hilfssystem (100) zur Verwendung mit einem Fahrzeug, umfassend:
eine Luftverdichtungseinrichtung (110), die angeordnet ist, um Druckluft zur Verwendung durch das Fahrzeug zu erzeugen;
einen ersten Elektromotor (160A), der angeordnet ist, um die Luftverdichtungseinrichtung anzutreiben;
eine Servolenkungseinrichtung (120), die angeordnet ist, um hydraulischen Druck zur Servolenkung bereitzustellen; und
eine Eingabe/Ausgabe-Einrichtung (140), die angeordnet ist, um eine Kommunikation von zumindest einem von der Luftverdichtungseinrichtung und der Servolenkungseinrichtung mit einer Steuereinrichtung (170) des Fahrzeugs zu ermöglichen, wobei die Eingabe/Ausgabe-Einrichtung und die Steuereinrichtung angeordnet sind, um über ein standardisiertes Controller Area Network-Protokoll, CAN-Protokoll, zu kommunizieren, wobei alle Komponenten des Hilfssystems zusammen in einem Gehäuse untergebracht sind und das Hilfssystem in seiner Gesamtheit angeordnet ist, um lösbar mit dem Fahrzeug verbunden zu sein.

2. Hilfssystem nach Anspruch 1, ferner umfassend einen ersten Inverter, der angeordnet ist, um den ersten Elektromotor zu speisen, um eine Drehantriebskraft zu erzeugen, die wiederum ein Drehmoment für den Betrieb der Luftverdichtungseinrichtung erzeugt.

3. Hilfssystem nach Anspruch 1 oder Anspruch 2, ferner umfassend einen zweiten Elektromotor (160B), der angeordnet ist, um die Servolenkungseinrichtung anzutreiben, optional ferner umfassend einen zweiten Inverter, der angeordnet ist, um den zweiten Elektromotor zu speisen, um eine Drehantriebskraft zu erzeugen, die wiederum ein Drehmoment für den Betrieb der Servolenkungseinrichtung erzeugt.

4. Hilfssystem (100) zur Verwendung mit einem Fahrzeug, umfassend:
eine Luftverdichtungseinrichtung (110), die angeordnet ist, um Druckluft zur Verwendung durch das Fahrzeug zu erzeugen;
einen ersten Elektromotor (160A), der angeordnet ist, um die Luftverdichtungseinrichtung anzutreiben;
eine Invertereinrichtung (130), die angeordnet ist, um den ersten Elektromotor zu speisen, um eine Drehantriebskraft zu erzeugen, die wiederum ein Drehmoment für den Betrieb der Luftverdichtungseinrichtung erzeugt; und
eine Eingabe/Ausgabe-Einrichtung (140), die angeordnet ist, um eine Kommunikation der Luftverdichtungseinrichtung mit einer Steuereinrichtung (170) des Fahrzeugs zu ermöglichen, wobei die Eingabe/Ausgabe-Einrichtung und die Steuereinrichtung angeordnet sind, um über ein standardisiertes Controller Area Network-Protokoll, CAN-Protokoll, zu kommunizieren,
wobei alle Komponenten des Hilfssystems zusammen in einem Gehäuse untergebracht sind und das Hilfssystem in seiner Gesamtheit angeordnet ist, um lösbar mit dem Fahrzeug verbunden zu sein.

5. Hilfssystem nach Anspruch 4, ferner umfassend eine Servolenkungseinrichtung (120), die angeordnet ist, um hydraulischen Druck zur Servolenkung bereitzustellen.

6. Hilfssystem nach Anspruch 5, ferner umfassend einen zweiten Elektromotor (160B), der angeordnet ist, um die Servolenkungseinrichtung anzutreiben, wobei optional die Invertereinrichtung angeordnet ist, um den zweiten Elektromotor zu speisen, um eine Drehantriebskraft zu erzeugen, die wiederum ein Drehmoment für den Betrieb der Servolenkungseinrichtung erzeugt.

7. Hilfssystem nach Anspruch 5, wobei die Eingabe/Ausgabe-Einrichtung angeordnet ist, um eine Kommunikation der Servolenkungseinrichtung mit der Steuereinrichtung zu ermöglichen.

8. Hilfssystem (100) zur Verwendung mit einem Fahrzeug, umfassend:
eine Servolenkungseinrichtung (120), die angeordnet ist, um hydraulischen Druck zur Servolenkung bereitzustellen;
einen ersten Elektromotor (160A), der angeordnet ist, um die Servolenkungseinrichtung anzutreiben;
eine Invertereinrichtung (130), die angeordnet ist, um den ersten Elektromotor zu speisen, um eine Drehantriebskraft zu erzeugen, die wiederum ein Drehmoment für den Betrieb der Servolenkungseinrichtung erzeugt; und
eine Eingabe/Ausgabe-Einrichtung (140), die angeordnet ist, um eine Kommunikation der Servolenkungseinrichtung mit einer Steuereinrichtung (170) des Fahrzeugs zu ermöglichen, wobei die Eingabe/Ausgabe-Einrichtung und die Steuereinrichtung angeordnet sind, um über ein standardisiertes Controller Area Network-Protokoll, CAN-Protokoll, zu kommunizieren,
wobei alle Komponenten des Hilfssystems zusammen in einem Gehäuse untergebracht sind und das Hilfssystem in seiner Gesamtheit angeordnet ist, um lösbar mit dem Fahrzeug verbunden zu sein.

9. Hilfssystem nach Anspruch 8, ferner umfassend eine Luftverdichtungseinrichtung (110), die angeordnet ist, um Druckluft zur Verwendung durch das Fahrzeug zu erzeugen.

10. Hilfssystem nach Anspruch 9, ferner umfassend einen zweiten Elektromotor (160B), der angeordnet ist, um die Luftverdichtungseinrichtung anzutreiben, wobei optional die Invertereinrichtung angeordnet ist, um den zweiten Elektromotor zu speisen, um eine Drehantriebskraft zu erzeugen, die wiederum ein Drehmoment für den Betrieb der Luftverdichtungseinrichtung erzeugt.

11. Hilfssystem nach einem der Ansprüche 9 bis 10, wobei die Eingabe/Ausgabe-Einrichtung angeordnet ist, um eine Kommunikation der Luftverdichtungseinrichtung mit der Steuereinrichtung zu ermöglichen.

12. Hilfssystem nach einem der vorhergehenden Ansprüche, ferner umfassend eine Sensoreinrichtung (150) zum Erfassen von zumindest einem von: Motoröltemperatur, Verdichteröltemperatur, Hydraulikflüssigkeitstemperatur und Hydraulikflüssigkeitsstand, wobei die erfassten Daten an eine Steuereinrichtung des Fahrzeugs übertragen werden.

13. Hilfssystem nach einem der vorhergehenden Ansprüche, ferner umfassend einen Schnelllöseverbindungsmechanismus zum Verbinden mit einem Gehäuse (400) des Fahrzeugs.

14. Hilfssystem nach Anspruch 13, wobei der Verbindungsmechanismus einen Außenrahmen (380) umfasst, der angeordnet ist, um alle Komponenten des Hilfssystems aufzunehmen, wobei der Außenrahmen lösbar mit einem Gehäuse (400) des Fahrzeugs verbindbar ist.

15. Hilfssystem nach Anspruch 14, wobei der Außenrahmen mindestens ein Schraubenloch zur Verwendung mit einer Mutter- und Schraubenanordnung umfasst, um das Hilfssystem an dem Gehäuse des Fahrzeugs zu befestigen.

## Revendications

1. Système auxiliaire (100) destiné à être utilisé avec un véhicule, comprenant :
un appareil (110) de compression d'air agencé pour générer de l'air comprimé à utiliser par le véhicule ;
un premier moteur électrique (160A) agencé pour entraîner l'appareil de compression d'air ;
un appareil (120) de direction assistée agencé pour fournir une pression hydraulique servant à la direction assistée ; et
un appareil (140) d'entrée/sortie agencé pour permettre une communication d'au moins un appareil parmi l'appareil de compression d'air et l'appareil de direction assistée avec un appareil (170) de commande du véhicule, l'appareil d'entrée/sortie et l'appareil de commande étant agencés pour communiquer via un protocole standardisé de réseau CAN,
tous les composants du système auxiliaire étant conditionnés ensemble et le système auxiliaire dans son ensemble étant agencé pour être lié de façon détachable au véhicule.

2. Système auxiliaire selon la revendication 1, comprenant en outre un premier onduleur agencé pour alimenter le premier moteur électrique afin de générer une force d'entraînement en rotation qui génère elle-même un couple servant au fonctionnement de l'appareil de compression d'air.

3. Système auxiliaire selon la revendication 1 ou la revendication 2, comprenant en outre un second moteur électrique (160B) agencé pour entraîner l'appareil de direction assistée, comprenant en outre optionnellement un second onduleur agencé pour alimenter le second moteur électrique afin de générer une force d'entraînement en rotation qui génère elle-même un couple servant au fonctionnement de l'appareil de direction assistée.

4. Système auxiliaire (100) destiné à être utilisé avec un véhicule, comprenant :
un appareil (110) de compression d'air agencé pour générer de l'air comprimé à utiliser par le véhicule ;
un premier moteur électrique (160A) agencé pour entraîner l'appareil de compression d'air ;
un appareil (130) d'onduleur agencé pour alimenter le premier moteur électrique afin de générer une force d'entraînement en rotation qui génère elle-même un couple servant au fonctionnement de l'appareil de compression d'air ; et
un appareil (140) d'entrée/sortie agencé pour permettre une communication de l'appareil de compression d'air avec un appareil (170) de commande du véhicule, l'appareil d'entrée/sortie et l'appareil de commande étant agencés pour communiquer via un protocole standardisé de réseau CAN,
tous les composants du système auxiliaire étant conditionnés ensemble et le système auxiliaire dans son ensemble étant agencé pour être lié de façon détachable au véhicule.

5. Système auxiliaire selon la revendication 4, comprenant en outre un appareil (120) de direction assistée agencé pour fournir une pression hydraulique servant à la direction assistée.

6. Système auxiliaire selon la revendication 5, comprenant en outre un second moteur électrique (160B) agencé pour entraîner l'appareil de direction assistée, l'appareil d'onduleur étant optionnellement agencé pour alimenter le second moteur électrique afin de générer une force d'entraînement en rotation qui génère elle-même un couple servant au fonctionnement de l'appareil de direction assistée.

7. Système auxiliaire selon la revendication 5, l'appareil d'entrée/sortie étant agencé pour permettre une communication de l'appareil de direction assistée avec l'appareil de commande.

8. Système auxiliaire (100) destiné à être utilisé avec un véhicule, comprenant :
un appareil (120) de direction assistée agencé pour fournir une pression hydraulique servant à la direction assistée ;
un premier moteur électrique (160A) agencé pour entraîner l'appareil de direction assistée ;
un appareil (130) d'onduleur agencé pour alimenter le premier moteur électrique afin de générer une force d'entraînement en rotation qui génère elle-même un couple servant au fonctionnement de l'appareil de direction assistée ; et
un appareil (140) d'entrée/sortie agencé pour permettre une communication de l'appareil de direction assistée avec un appareil (170) de commande du véhicule, l'appareil d'entrée/sortie et l'appareil de commande étant agencés pour communiquer via un protocole standardisé de réseau CAN,
tous les composants du système auxiliaire étant conditionnés ensemble et le système auxiliaire dans son ensemble étant agencé pour être lié de façon détachable au véhicule.

9. Système auxiliaire selon la revendication 8, comprenant en outre un appareil (110) de compression d'air agencé pour générer de l'air comprimé à utiliser par le véhicule.

10. Système auxiliaire selon la revendication 9, comprenant en outre un second moteur électrique (160B) agencé pour entraîner l'appareil de compression d'air, l'appareil d'onduleur étant optionnellement agencé pour alimenter le second moteur électrique afin de générer une force d'entraînement en rotation qui génère elle-même un couple servant au fonctionnement de l'appareil de compression d'air.

11. Système auxiliaire selon l'une quelconque des revendications 9 à 10, l'appareil d'entrée/sortie étant agencé pour permettre une communication de l'appareil de compression d'air avec l'appareil de commande.

12. Système auxiliaire selon l'une quelconque des revendications précédentes, comprenant en outre un appareil (150) de capteur servant à détecter au moins une grandeur parmi : une température d'huile de moteur, une température d'huile de compresseur, une température de fluide hydraulique, et un niveau de fluide hydraulique, les données détectées étant transmises à un appareil de commande du véhicule.

13. Système auxiliaire selon l'une quelconque des revendications précédentes, comprenant en outre un mécanisme de liaison à libération rapide destiné à se lier à un châssis (400) du véhicule.

14. Système auxiliaire selon la revendication 13, le mécanisme de liaison comprenant une ossature extérieure (380) agencée pour contenir tous les composants du système auxiliaire, l'ossature extérieure pouvant être liée de façon détachable à un châssis (400) du véhicule.

15. Système auxiliaire selon la revendication 14, l'ossature extérieure comprenant au moins un trou de boulon destiné à être utilisé avec un ensemble écrou-boulon de façon à fixer le système auxiliaire au châssis du véhicule.
